# EUROPEAN PATENT APPLICATION

(11) **EP 4 455 949 A1**
(43) Date of publication of application: **30.10.2024**
(21) Application number: 24160823.1
(22) Date of filing: 01.03.2024
(51) Int. Cl.: G06N 3/0985, G06N 3/09

(54) **DATA ANALYSIS SYSTEM AND DATA ANALYSIS METHOD**

(30) Priority: 28.04.2023 JP 2023075080
(71) Applicant: Shimadzu Corporation, Nakagyo-ku, Kyoto-shi, Kyoto 604-8511 (JP)
(72) Inventor: SAWADA, Ryuji, Kyoto-shi, Kyoto, 604-8511 (JP); MORITANI, Yuka, Kyoto-shi, Kyoto, 604-8511 (JP); TSUSHIMA, Hiroaki, Kyoto-shi, Kyoto, 604-8511 (JP); ONO, Takeshi, Kyoto-shi, Kyoto, 604-8445 (JP)
(74) Representative: Müller-Boré & Partner Patentanwälte PartG mbB

(57) **Abstract**

A data analysis system (100) according to this invention includes a data acquirer (10); an analyzer (12a) configured to analyze a to-be-analyzed data (20) by using a learned model (30); a learned model producer (12b) configured to produce the learned model (30); a storage (11) configured to store each of a plurality of learned models (30) associated with a different version(s) of learned model(s) (30) that is/are other learned model(s) of the plurality of learned models; a display (2a) configured to display the learned models (30); and a controller (12) configured to control the display (2a) to display a selected learned model (30), and the different version(s) of learned model(s) (30) that is/are associated with the selected learned model (30) on a common screen.

## Description

### BACKGROUND OF THE INVENTION

### Field of the Invention

The present invention relates to a data analysis system and a data analysis method, and in particular to a data analysis system and a data analysis method for producing a learned model and analyzing to-be-analyzed data by using the learned model produced.

### Description of the Background Art

Data analysis systems for producing a learned model and analyzing to-be-analyzed data by using the learned model produced are known in the art. Such a data analysis system is disclosed in Japanese Patent Laid-Open Publication No. JP2022-174740, for example.

The above Japanese Patent Laid-Open Publication No. JP2022-174740 discloses a learning assistance system including a measurement device, a display, a storage, and a controller. The above Japanese Patent Laid-Open Publication No. JP2022-174740 discloses a configuration in which a plurality of learned models are displayed on the display and a learned model is produced based on one learned model that is selected from the plurality of learned models. In addition, the learning assistance system disclosed in the above Japanese Patent Laid-Open Publication No. JP2022-174740 is configured to analyze cell images by using the learned model produced.

Although not stated in the above Japanese Patent Laid-Open Publication No. JP2022-174740, in order to improve accuracy of analysis of the to-be-analyzed data, a plurality of different versions of learned models are produced by changing teacher data or learning parameters in some cases. In such a case, operators select a learned model to be used for analysis of the to-be-analyzed data from the plurality of different versions of learned models when analyzing the to-be-analyzed data. However, because the plurality of learned models are listed on the display in the configuration disclosed in the above Japanese Patent Laid-Open Publication No. JP2022-174740, if such a plurality of different versions of learned models are displayed in the configuration disclosed in the above Japanese Patent Laid-Open Publication No. JP2022-174740, operators may not easily grasp the plurality of different versions of learned models at a glance. For this reason, it is desired to provide a technology that allows operators to easily grasp such a plurality of different versions of learned models at a glance.

### SUMMARY OF THE INVENTION

The present invention is intended to solve the above problem, and one object of the present invention is to provide a data analysis system, a data analysis apparatus, and a data analysis method capable of allowing operators to easily grasp a plurality of different versions of learned models at a glance.

In order to attain the aforementioned object, a data analysis system according to a first aspect of the present invention is a data analysis system for analyzing to-be-analyzed data, which is data to be analyzed, by using a learned model, the data analysis system including a data acquirer configured to acquire the to-be-analyzed data items; an analyzer configured to analyze the to-be-analyzed data by using the learned model; a learned model producer configured to produce the learned model by using at least teacher data; a storage configured to store each of a plurality of learned models as the learned model associated with the teacher data that is used to produce each of the plurality of learned models by the learned model producer, and with a different version(s) of learned model(s) that is/are other learned model(s) of the plurality of learned models and whose analysis purpose is common to each of the plurality of learned models; a display configured to display the plurality of learned models stored in the storage; and a controller configured to control the display to display a selected learned model that is selected from the plurality of learned models displayed on the display, and the different version(s) of learned model(s) that is/are associated with the selected learned model on a common screen. Here, when considering one learned model (each of a plurality of learned models), the term "different version(s) of learned model(s)" refers to other learned model(s) that is/are described for production of a network structure by the same source code as the one learned model with teacher data, training parameters etc. being changed.

A data analysis apparatus according to a second aspect of the present invention is a data analysis apparatus for analyzing to-be-analyzed data, which is data to be analyzed, by using a learned model, the data analysis apparatus including a data acquirer configured to acquire the to-be-analyzed data items; an analyzer configured to analyze the to-be-analyzed data by using the learned model; a learned model producer configured to produce the learned model by using at least teacher data; a storage configured to store each of a plurality of learned models as the learned model associated with the teacher data that is used to produce each of the plurality of learned models by the learned model producer, and with a different version(s) of learned model(s) that is/are other learned model(s) of the plurality of learned models and whose analysis purpose is common to each of the plurality of learned models; a display configured to display the plurality of learned models stored in the storage; and a controller configured to control the display to display a selected learned model that is selected from the plurality of learned models displayed on the display, and the different version(s) of learned model(s) that is/are associated with the selected learned model on a common screen.

Also, a data analysis method according to a third aspect of the present invention is a data analysis method for analyzing to-be-analyzed data, which is data to be analyzed, by using a learned model, the data analysis method including a step of producing the learned model by using at least teacher data; a step of storing each of a plurality of learned models as the learned model associated with the teacher data that is used to produce each of the plurality of learned models by the learned model producer, and with a different version(s) of learned model(s) that is/are other learned model(s) of the plurality of learned models and whose analysis purpose is common to each of the plurality of learned models; and a step of displaying a selected learned model that is selected from the plurality of learned models stored, and the different version(s) of learned model(s) that is/are associated with the selected learned model on a common screen.

In the data analysis system according to the first aspect and the data analysis apparatus according to the second aspect, the display is configured to display the plurality of learned models stored in the storage, and the controller is configured to control the display to display a selected learned model that is selected from the plurality of learned models displayed on the display, and the different version(s) of learned model(s) that is/are associated with the selected learned model on a common screen. In the data analysis method according to the third aspect, as discussed above, the step of displaying a selected learned model that is selected from the plurality of learned models stored, and the different version(s) of learned model(s) that is/are associated with the selected learned model on a common screen is provided. Accordingly, because the common screen displays the selected learned model that is selected from the plurality of learned models stored, and the different version(s) of learned model(s) that is/are associated with the selected learned model, operators can easily grasp such a plurality of different versions of learned models at a glance. As a result, it is possible to provide a data analysis system, a data analysis apparatus, and a data analysis method capable of allowing operators to easily grasp the plurality of different versions of learned models at a glance. Consequently, operators can efficiently select a learned model to be used for analysis of to-be-analyzed data from the plurality of different versions of learned models when analyzing the to-be-analyzed data.

### BRIEF DESCRIPTION OF THE DRAWINGS

FIG. 1 is a schematic diagram showing an entire configuration of a data analysis system according to one embodiment.
FIG. 2 is a schematic diagram illustrating a configuration in which a plurality of different versions of learned models whose analysis purposes are common to each other are associated with each other based on to-be-analyzed data in the one embodiment.
FIG. 3 shows a schematic diagram illustrating an exemplary screen for selection of a learning model, etc. in production of a learned model in the data analysis system according to the one embodiment.
FIG. 4 is a schematic diagram illustrating an exemplary screen displaying a plurality of learned models in the data analysis system according to the one embodiment.
FIG. 5 is a schematic diagram illustrating an exemplary screen displaying a version history of different versions of learned models whose analysis purposes are common to each other in the data analysis system according to the one embodiment.
FIG. 6 shows a schematic diagram illustrating an evaluation screen of accuracy of analysis of a plurality of different versions of learned models whose analysis purposes are common to each other in the data analysis system according to the one embodiment.
FIG. 7 is a schematic diagram illustrating an exemplary screen for setting an analysis recipe in analysis using a learned model in the data analysis system according to the one embodiment.
FIG. 8 is a schematic diagram illustrating an exemplary screen displaying a plurality of different versions of learned models whose analysis purposes are common to each other in selection of the analysis recipe in the data analysis system according to the one embodiment.
FIG. 9 is a flowchart illustrating a process for displaying a plurality of different versions of learned models whose analysis purposes are common to each other in the data analysis system according to the one embodiment.
FIG. 10 shows a flowchart illustrating a process for determining whether a version name of a learned model is the latest name in the data analysis system according to the one embodiment.
FIG. 11 is a schematic diagram showing an entire configuration of a data analysis system according to a first modified embodiment.
FIG. 12 is a schematic diagram showing an entire configuration of a data analysis system according to a second modified embodiment.

### DESCRIPTION OF THE PREFERRED EMBODIMENT

Embodiments embodying the present invention will be described with reference to the drawings.

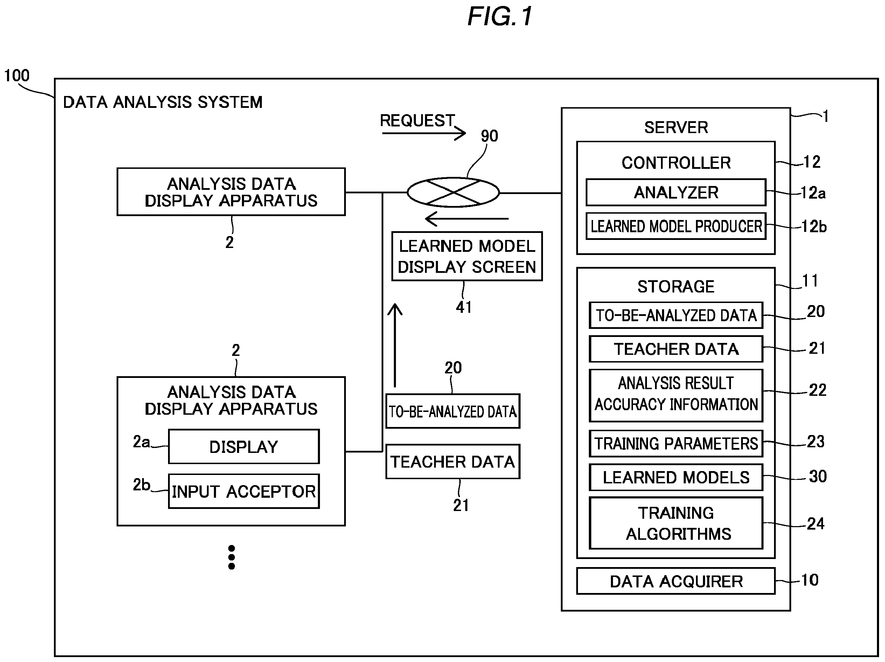

The following description describes a configuration of a data analysis system 100 according to one embodiment with reference to FIG. 1. The data analysis system 100 is a data analysis system for analyzing to-be-analyzed data 20, which is data to be analyzed, by using a learned model 30. The data analysis system 100 is configured to produce the learned model 30. For example, the data analysis system 100 analyzes images of cells as the to-be-analyzed data 20. The to-be-analyzed data 20 analyzed by the data analysis system 100 is not limited to images of cells. For example, the to-be-analyzed data 20 can include X-ray images.

### (Configuration of Data Analysis System)

As shown in FIG. 1, the data analysis system 100 includes a server 1 and analysis data display apparatuses 2.

The data analysis system 100 shown in FIG. 1 is illustratively constructed of an on-premises client-server model. The analysis data display apparatuses 2 serve as a client terminal in the data analysis system 100. The server 1 serves as a server for analyzing data in the data analysis system 100. The server 1 and the analysis data display apparatuses 2 can communicate with each other through a network 90. The server 1 performs various types of information processing in response to requests (processing requests) from the analysis data display apparatuses 2 operated by users. The server 1 analyzes the to-be-analyzed data 20 in accordance with the requests. The on-premises refers to an arrangement in which the server 1 and the analysis data display apparatuses 2 are located in the same facility.

The server 1 is configured to produce a learned model display screen 41, which is a screen for displaying the learned model 30, in response to a request. The server 1 can send the learned model display screen 41 to the analysis data display apparatuses 2.

The network 90 connects the server 1 and the analysis data display apparatuses 2 to each other so that they can communicate with each other. The network 90 can be a local area network (LAN) configured in the facility, for example.

The analysis data display apparatus 2 is configured to display an analysis result of the to-be-analyzed data 20, which is data to be analyzed. Also, the analysis data display device 2 is configured to display the learned model 30 to be used for analysis of the to-be-analyzed data 20. The analysis data display apparatus 2 is a so-called personal computer including a processor (not shown) and a storage (not shown). In addition, the analysis data display apparatus 2 includes the display 2a and an input acceptor 2b.

The display 2a is configured to display at least one of the to-be-analyzed data 20 and the learned model 30. In this embodiment, the display 2a is configured to display a plurality of learned models 30 stored in the storage 11, which will be described later. For example, the display 2a is a display device such as an LCD monitor or an organic EL (Electro Luminescence) monitor. The display 2a may be a projector or head-mounted display.

The input acceptor 2b is configured to accept input from the operator. For example, the input acceptor 2b is an input device including a computer mouse and a keyboard. Alternatively, the input acceptor 2b can be a touch panel. The data analysis system 100 can includes one or more analysis data display apparatuses 2.

The server 1 includes a data acquirer 10, a storage 11 and a controller 12.

The data acquirer 10 is configured to acquire the to-be-analyzed data 20. Specifically, the data acquirer 10 is configured to acquire the to-be-analyzed data 20 provided from the analysis data display apparatuses 2 through the network 90. In this embodiment, the data acquirer 10 is configured to acquire teacher data 21 provided from the analysis data display apparatuses 2 through the network 90. The teacher data 21 is training data used to produce the learned model 30. For example, the data acquirer 10 includes an input/output interface.

The storage 11 is configured to store various programs to be executed by the controller 12. Also, the storage 11 is configured to store the learned models 30, and the to-be-analyzed data 20. In this embodiment, the storage 11 is configured to store each of the plurality of learned models 30 as the learned model associated with the teacher data 21 that is used to produce each of the plurality of learned models 30 by a learned model producer 12b, which will be described later, and with a different version(s) of learned model(s) 30 that is/are other learned model(s) of the plurality of learned models and whose analysis purpose is common to each of the plurality of learned models. Also, the storage 11 is configured to store information 22 on accuracies of results of analysis, which will be described later, and learning parameters 23, which will be described later. The analysis purpose refers to what type of analysis is performed on the to-be-analyzed data 20, and what type of data the analysis is performed on. For example, the analysis purpose include information about what type of processing is performed (e.g., segmentation of a cell image, segmentation of an X-ray image, etc.). In this specification, if learned models are used for a common analysis purpose, or if their analysis purposes are common to each other, this means that types of analysis performed on the to-be-analyzed data 20 are the same as each other.

The storage 11 includes a nonvolatile storage such as an HDD (Hard Disk Drive) or an SSD (Solid State Drive), for example. A configuration the storage 11 for storing the learned models 30 associated with their corresponding teacher data 21, and a configuration the storage 11 for storing different versions of learned models 30 whose common analysis purposes are common to each other with each other will be described later.

The learned model 30 is produced, for example, by training a convolutional neural network (CNN) or a learning model including a convolutional neural network by using the teacher data 21.

The controller 12 is configured to analyze the to-be-analyzed data 20. Also, the controller 12 is configured to direct the display 2a to display a plurality of learned models 30. The controller 12 can include a CPU (Central Processing Unit), circuitry, a ROM (Read Only Memory), a RAM (Random Access Memory), a graphics processing unit (GPU), a field-programmable gate array (FPGA) configured for image processing, etc.

The controller 12 includes an analyzer 12a, and a learned model producer 12b. The analyzer 12a and the learned model producer 12b are constructed of software as functional blocks realized by executing the program by the controller 12. Alternatively, the analyzer 12a and the learned model producer 12b can be constructed of hardware by providing dedicated processors (processing circuits).

The analyzer 12a is configured to analyze the to-be-analyzed data 20 by using the learned model 30. The analyzer 12a analyzes the to-be-analyzed data 20 by using the learned model 30 that is selected by an operator. For example, in a case in which the to-be-analyzed data 20 is a cell image, the analyzer 12a uses the learned model 30 that is configured to determine whether a cell in the cell image is differentiated or keeps undifferentiated. The analyzer 12a can differently analyze to-be-analyzed data depending on the to-be-analyzed data 20, and the learned model 30 that is used by the analyzer 12a.

The learned model producer 12b is configured to produce the learned model 30 by using at least the teacher data 21. In this embodiment, the learned model producer 12b is configured to produce the learned model 30 base on one of an algorithm 24 of the training model that is selected by the operator and the learned model 30, and the teacher data 21 that is selected by the operator. For example, the algorithm 24 of the training model includes a neural network.

A configuration of the controller 12 for displaying the learned model 30 will be described later.

### (Version Management of Learned Models)

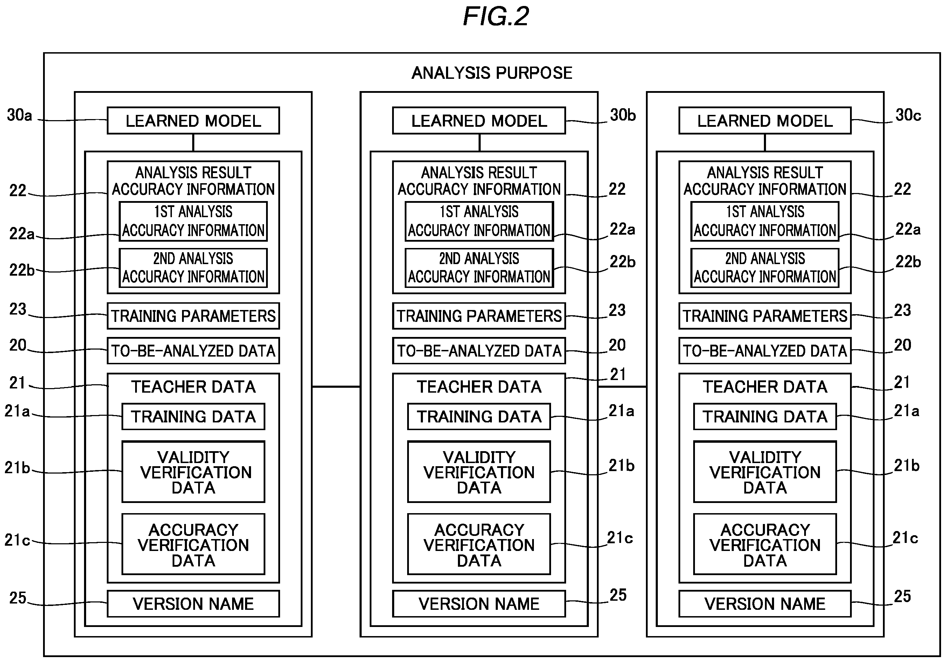

A configuration of the controller 12 (see FIG. 1) for managing versions of learned models 30 (see FIG. 1) is now described with reference to FIG. 2.

In this embodiment, the controller 12 is configured to manage versions of the learned models 30 by storing a plurality of different versions of learned models 30 whose analysis purposes are common to each other associated with each other in the storage 11 (see FIG. 1).

FIG. 2 is a schematic diagram illustrating an exemplary configuration in which a first to third learned models 30a to 30c whose analysis purposes are common to each other are associated with each other and stored. The first learned model 30a, the second learned model 30b, and the third learned model 30c are the learned models 30 that are described by the same algorithm 24 (see FIG. 1) but are have version names 25 different from each other.

In this embodiment, the controller 12 is configured to associate each learned model 30 with the to-be-analyzed data 20, the teacher data 21, information 22 on accuracy of the result of analysis, the training parameters 23, and the version name 25 to be stored.

The teacher data 21 includes training data 21a, validity verification data 21b, and accuracy verification data 21c. The training data 21a is used for training in production of the learned model 30. In addition, the validity verification data 21b is used to verify validity of the learned model 30 produced. The accuracy verification data 21c is used to verify accuracy of the learned model 30.

In this embodiment, the storage 11 is configured to store learned models 30 whose algorithms 24 of training models are common to each other and that are produced by changing at least one of the teacher data 21 and training parameters 23 that are specified to produce corresponding one of the learned models 30 as different versions of learned models 30 associated with each other. The term algorithms of training models 24 are common refers to network structures of the algorithms 24 of the training models are the same as each other.

In this embodiment, the storage 11 (see FIG. 1) is configured to store each of a plurality of learned models 30 associated with information 22 on accuracy of a result of analysis of the to-be-analyzed data 20 together with the teacher data 21, and with the different versions of learned models 30 whose analysis purpose is common to each of the plurality of learned models. The information 22 on accuracy of a result of analysis includes first analysis accuracy information 22a that is information on accuracy of a result of analysis by the different versions of learned models 30 whose analysis purposes are common to each of the plurality of learned models 30 as the information 22, and second analysis accuracy information 22b that is information on accuracy of a result of analysis obtained by analyzing the to-be-analyzed data 20 that is different from the to-be-analyzed data 20 that is used by a common version of learned models 30 whose version is equal to each of the plurality of learned models 30 as the information 22. As a result, the storage 11 is configured to store each of the plurality of learned models 30 associated with the first analysis accuracy information 22a and the second analysis accuracy information 22b.

Here, the data analysis system 100 according to this embodiment is configured to produce the learned model 30, and to analyze the to-be-analyzed data 20 by using the learned model 30.

### Production of Learned Model

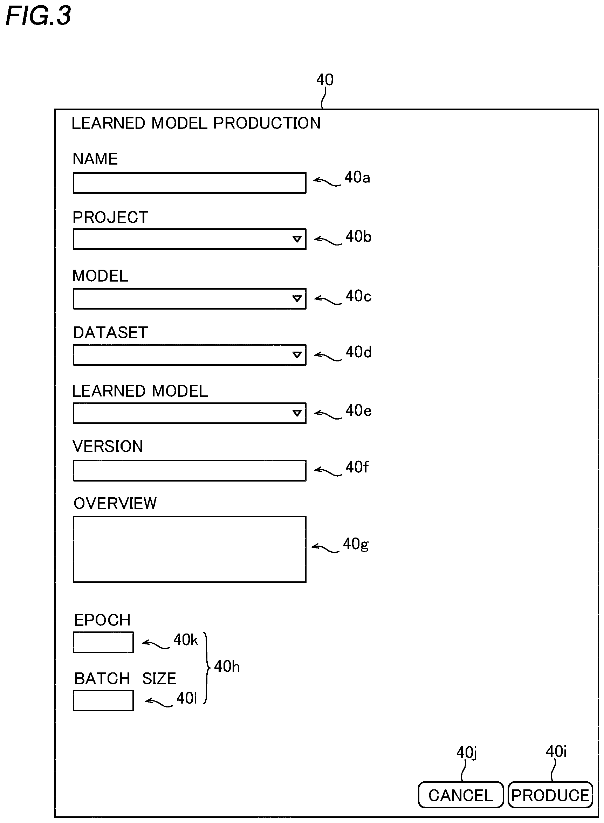

Firstly, a configuration of the data analysis system 100 (see FIG. 1) for producing a learned model 30 is described with reference to FIGS. 3 to 6.

A learned model production screen 40 shown in FIG. 3 is a screen that is displayed on the display 2a (see FIG. 1) when an operator produces the learned model 30 (see FIG. 1).

The learned model production screen 40 includes a name input field 40a, a project selection field 40b, a model selection field 40c, a dataset selection field 40d, a learned model selection field 40e, a version name input field 40f, an overview input field 40g, a training parameter input field 40h, a produce button 40i, and a cancel button 40j.

The name input field 40a is an input field into which a name of the learned model 30 to be produced is entered. The project selection field 40b is a selection field in which a project of the learned model 30 to be produced is selected. The project of the learned model 30 is a category that is specified for the learned model 30. In other words, each learned model 30 is stored in a project that is selected for it in the storage 11.

The model selection field 40c is a selection field in which an algorithm 24 (see FIG. 1) of the training model to be used in production of the learned model 30 is selected. The dataset selection field 40d is a selection field in which the teacher data 21 (see FIG. 1) to be used to produce the learned model 30 is selected.

The learned model selection field 40e is a selection field of the learned model 30 in which the learned model 30 to be used for production is selected. The learned model 30 can be produced based on the learned model 30 stored in the storage 11 by selecting the learned model 30 in the learned model selection field 40e. In other words, an improved learned model 30 can be produced by improving a learned model 30 that has already been produced. In this embodiment, the controller 12 is configured to control the display 2a, in production of the different version of learned model 30 whose analysis purpose is common to the selected learned model 30, to selectively display a plurality of versions of learned models 30 that are stored in the storage 11.

The version name input field 40f is an input field in which the version name 25 of the learned model 30 to be produced is entered. The overview input field 40g is an input field in which an overview of the learned model 30 to be produced, operator's comment, etc. is entered. The training parameter input field 40h is an input field in which the training parameters 23 (see FIG. 1) to be used to produce the learned model 30 are entered. In the exemplary screen shown in FIG. 3, the training parameter input field 40h includes an epoch number input field 40k in which an epoch number is entered, and a batch size input field 401 in which a batch size is entered.

The name input field 40a, the version name input field 40f, the overview input field 40g, the epoch number input field 40k, and the batch size input field 40L are text boxes, for example. Also, the project selection field 40b, the model selection field 40c, the dataset selection field 40d, and the learned model selection field 40e are combo boxes, for example.

The produce button 40i is a GUI (Graphical User Interface) button that is displayed on the learned model production screen 40. When the produce button 40i is pressed, the learned model producer 12b (see FIG. 1) produces the learned model 30 based on information entered in each input field and information selected in each selection field. For example, after an algorithm 24 of the training model is selected in the model selection field 40c, when the produce button 40i is pressed, the learned model producer 12b produces the learned model 30 by using the selected algorithm 24 of the training model.

For example, after a learned model is selected in the learned model selection field 40e, when the produce button 40i is pressed, the learned model producer 12b produces, based on the selected learned model 30 that is selected from a plurality of learned models 30 stored in the storage 11, a different version of learned model 30 whose analysis purpose is common to the selected learned model 30.

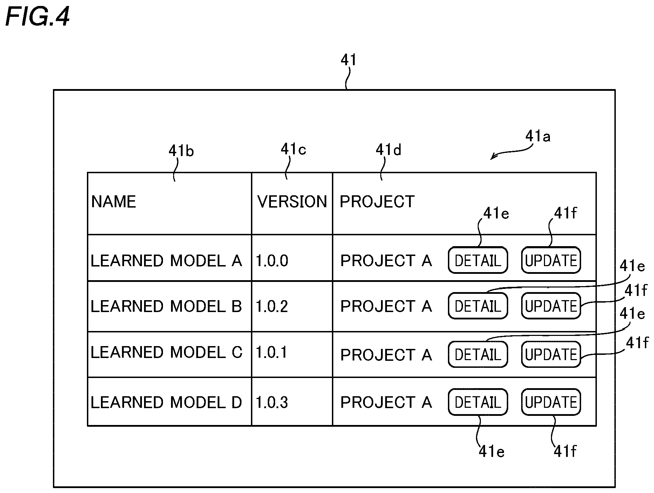

In this embodiment, the learned model producer 12b is configured to produce, in a case in which the learned model 30 is produced while the learned model 30 with common analysis purpose is being selected in the learned model display screen 41 (see FIG. 4), a different version of learned model 30 whose analysis purpose is common to the selected learned model 30 by changing at least one of the teacher data 21 (see FIG. 1) and training parameters 23 (see FIG. 1) that are specified to produce the selected learned model 30.

In this embodiment, the controller 12 is configured to, every when a different version of learned model 30 whose analysis purpose common to the selected learned model 30 is produced, add the latest version of learned model 30 as an option.

Also, the cancel button 40j is a GUI press button that is displayed on the learned model production screen 40. The controller 12 is configured to close the learned model production screen 40 without producing the learned model 30 if the cancel button 40j is pressed.

### (Management of Version Names)

In this embodiment, the controller 12 uses semantic versioning as a naming convention of the version name 25 of the learned model 30 (see FIG. 2). Semantic versioning is a convention of naming the version name 25 separating three numbers, which are called MAJOR version, MINOR version, and PATCH version, with commas. The naming convention can include naming conventions other than semantic versioning.

In this embodiment, the controller 12 is configured to determine whether the version name 25 of the learned model 30 is properly named based on the naming convention ruled to prevent the version name 25 of the learned model 30 from branching. The naming convention ruled to prevent the version name from branching refers to a naming convention that always provides a newly generated version name 25 of the learned model 30 with the latest version name 25. For example, in a case in which the storage 11 stores a learned model 30 to which a version name 25 of "1.1.1" is given and a learned model 30 to which a version name 25 of "1.1.3" is given, the naming convention ruled to prevent the version name from branching prevents a learned model 30 having a version name 25 of "1.1.2" from being generated.

Accordingly, in this embodiment, the controller 12 is configured to determine whether a version name 25 that is accepted by the input acceptor 2b is a latest version name 25 named in accordance with a naming convention, and to prevent the learned model producer 12b from producing the learned model 30 if the version name 25 that is accepted by the input acceptor 2b is not the latest version name 25 named in accordance with the naming convention. Specifically, the controller 12 is configured to compare MAJOR, MINOR and PATCH versions of the version names 25 of the learned models 30 with each other, and determine whether a newly generated version name 25 of the learned model 30 is the latest version name.

### (Displaying of Learned Models)

In analysis of the to-be-analyzed data 20 (see FIG. 1) using the learned model 30 (see FIG. 1), it is conceivable that a plurality of learned models 30 are produced by changing at least one of the teacher data 21 (see FIG. 1) and the training parameters 23 (see FIG. 1), and one of the learned models 30 that has the highest analysis accuracy is used for the analysis. In this case, because a plurality of different versions of learned models 30 whose analysis purposes are equal to each other are produced, in a case in which the plurality of different versions of learned models 30 are listed on the display 2a (see FIG. 1), operators cannot easily grasp the plurality of different versions of learned models 30 at a glance. To address this, in this embodiment, the controller 12 (see FIG. 1) is configured to display the different versions of learned models 30 whose analysis purposes are equal to each other for comparative display of the different versions of learned models 30.

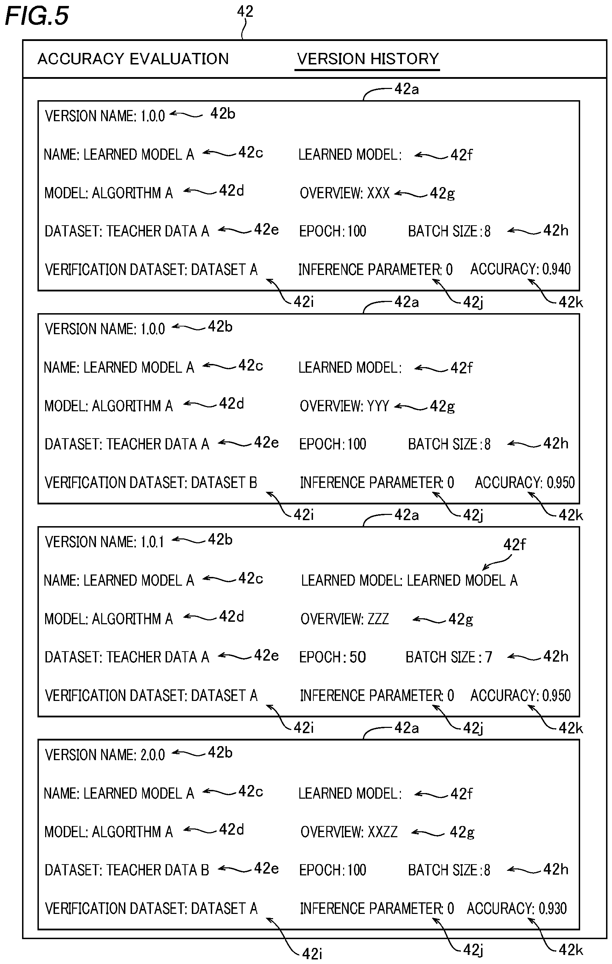

A configuration of the controller 12 for directing the display 2a to display the different versions of learned models 30 whose analysis purposes are equal to each other (see FIG. 1) is now described with reference to FIGS. 4 and 5.

The learned model display screen 41 shown in FIG. 4 is a screen for displaying a plurality of learned models 30 that are stored the storage 11 (see FIG. 1). The learned model display screen 41 includes the learned model display area 41a. The learned models 30 that are displayed on the learned model display screen 41 are learned models 30 that are used for different analysis purposes. In other words, the learned model display screen 41 is a screen that lists the plurality of learned models 30 whose analysis purposes are different.

The learned model display area 41a includes a name indication field 41b, a version name indication field 41c, and a project name indication field 41d.

The name indication field 41b is a field that indicates names of the learned model 30. The version name indication field 41c a field that indicates version names 25 (see FIG. 2) of the learned models 30. The project name indication field 41d is a field that indicates project names of the learned models 30. Detail buttons 41e and update buttons 41f are displayed for their corresponding learned model 30 in the project name indication field 41d.

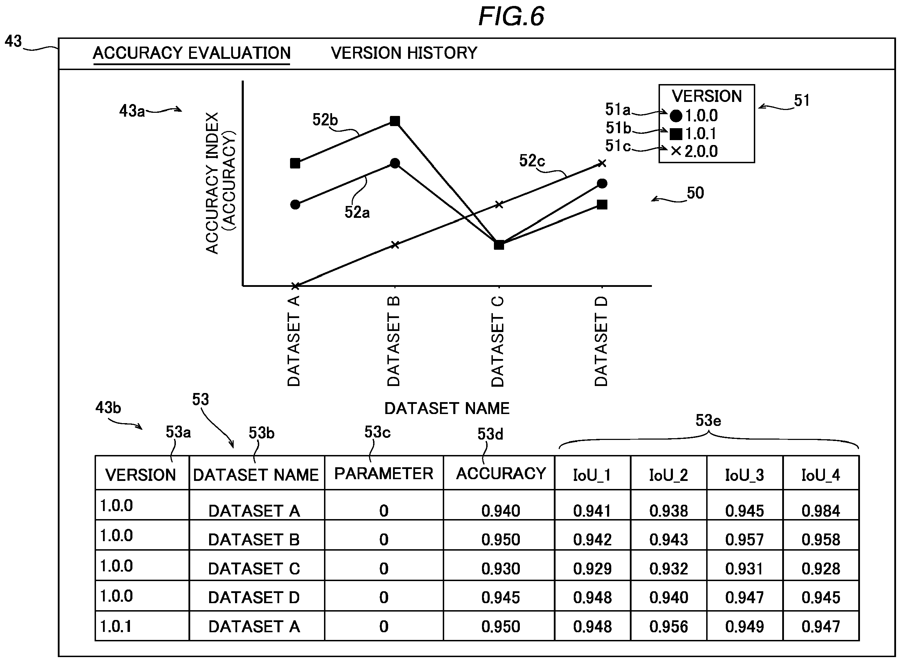

The detail buttons 41e are GUI press buttons. When an operator presses one of the detail buttons 41e is pressed, a detail screen of its corresponding learned model 30 is displayed. The detail screen includes a version history screen 42 shown in FIG. 5, and an accuracy evaluation screen 43 shown in FIG. 6.

### (Displaying of Version History of Learned Models)

The version history screen 42 shown in FIG. 5 displays the learned model 30 (see FIG. 1) that is selected in the learned model display screen 41 (see FIG. 4), and different versions of learned models 30 whose analysis purposes are common to the selected learned model 30 and that are associated with the selected learned model 30.

In this embodiment, the controller 12 (see FIG. 1) is configured to display the selected learned model 30 that is selected from the learned models 30 displayed on the display 2a (see FIG. 1), and the different versions of learned models 30 that are associated with the selected learned model 30 on a common screen. In this embodiment, the controller 12 is configured to display the selected learned model 30, and the different versions of learned models 30 whose analysis purposes are common to the selected learned model 30 and that are associated with the selected learned model 30 on the common screen. Specifically, the controller 12 is configured to direct the display 2a to display the version history screen 42 so as to display the selected learned model 30, and the different versions of learned models 30 whose analysis purposes are common to the selected learned model 30 and that are associated with the selected learned model 30 on the common screen. The learned models 30 that can be displayed by scrolling the screen are included in the learned models 30 that are displayed on the common screen.

The version history screen 42 includes a plurality of detailed information indication fields 42a that display detailed information on the learned models 30. In the exemplary screen shown in FIG. 5 displaying names of "learned model A", three detailed information indication fields 42a whose version names 25 (see FIG. 2) are different from each other, and one detailed information indication field 42a whose version name 25 is the same as the selected learned model 30 and whose verification dataset is different from the selected learned model 30. Specifically, the exemplary screen shown in FIG. 5 displays four detailed information indication fields 42a including a detailed information indication field whose version name 25 is "1.0.0" and whose verification dataset is A, a detailed information indication field whose version name 25 is "1.0.0" and whose verification dataset is B, a detailed information indication field whose version name 25 is "1.0.1" and whose verification dataset is A, and a detailed information indication field whose version name 25 is "2.0.0" and whose verification dataset is A.

Each detailed information indication field 42a includes a version name indication field 42b, a name indication field 42c, a model name indication field 42d, a dataset indication field 42e, a learned model indication field 42f, an overview indication field 42g, a training parameter indication field 42h, a verification dataset indication field 42i, an inference parameter indication field 42j, and an accuracy indication field 42k.

The version name indication field 42b is an indication field that indicates the version name 25 of the learned model 30. The name indication field 42c is an indication field that indicates the name of the learned model 30. The model name indication field 42d is an indication field that indicates the algorithm 24 (see FIG. 1) of the training model used in production of the learned model 30. The dataset indication field 42e is an indication field that indicates teacher data 21 used in the production of the learned model 30. The learned model indication field 42f is an indication field that indicates the learned model 30 used in the production of the learned model 30. The overview indication field 42g is an indication field that indicates the overview entered by the operator in the production of the learned model 30. The training parameter indication field 42h is an indication field that indicates the training parameters 23 (see FIG. 1) used in production of the learned model 30. The verification dataset indication field 42i is an indication field that indicates the to-be-analyzed data 20 (see FIG. 1) analyzed by the learned model 30 produced. The inference parameter indication field 42j is an indication field that indicates inference parameters set in the analysis of the to-be-analyzed data 20 using the learned model 30 produced. The accuracy indication field 42k is an indication field that indicates the information 22 on accuracy of a result of analysis (see FIG. 1) in the analysis of the to-be-analyzed data 20 using the learned model 30 produced.

In this embodiment, the analyzer 12a (see FIG. 1) is configured to analyze the to-be-analyzed data 20 based on an instruction entered by the operator by using the learned model 30. The controller 12 is configured to store the to-be-analyzed data 20, the inference parameters inference parameters set in the analysis, and information 22 on accuracies of results of analysis associated with the learned models 30 in the storage 11 when the to-be-analyzed data 20 is analyzed by the analyzer 12a. Accordingly, the controller 12 can display the to-be-analyzed data 20 analyzed by the learned model 30 produced, the inference parameters, and information 22 on the accuracies of results of analysis in the verification dataset indication field 42i, the inference parameter indication field 42j, and the accuracy indication field 42k of the version history screen 42.

### (Displaying of Accuracy Evaluation of Learned Model)

In a case in which the learned model 30 is improved, it is conceivable that a plurality of learned models 30 are produced by changing at least one of the teacher data 21 (see FIG. 1) and the training parameters 23 (see FIG. 1). However, even in the case in which at least one of the teacher data 21 and the training parameters 23 is changed to produce such a plurality of learned models 30, if operators cannot compare the information 22 on accuracies of results of analysis of the plurality of learned models 30, they cannot easily grasp which learned model 30 is suitable for analysis of the to-be-analyzed data 20 at a glance. To address this, in this embodiment, the controller 12 is configured to direct the display 2a to display the information 22 on accuracies of results of analysis of the plurality of learned models 30 for comparative display of the information.

The accuracy evaluation screen 43 shown in FIG. 6 displays information 22 on the accuracies of results of analysis (see FIG. 1) of a plurality of different versions of learned models 30 (see FIG. 1) whose analysis purposes are common to each other. The accuracy evaluation screen 43 includes a graph display area 43a, which indicates the information 22 on the accuracies of results of analysis in a graph format, and a matrix indication area 43b, which indicates the information 22 on the accuracies of results of analysis in a matrix format.

As shown in FIG. 6, the controller 12 (see FIG. 1) is configured to control the display 2a (see FIG. 1) to display the information on the accuracies of results of analysis of the different versions of plurality of learned models 30 whose analysis purposes are common to each other for comparative display of the information. Specifically, the controller 12 is configured to control the display 2a to display the information 22 on the accuracy of the result of analysis by the selected learned model 30 and the information 22 on the accuracy of the result of analysis based on the learned models 30 whose analysis purposes are common to one of the plurality of learned models 30 and the to-be-analyzed data 20 that are selected in accordance with an instruction input for the selection accepted by the input acceptor 2b (see FIG. 1) for comparative display of the information.

In a graph 50 displayed in the graph display area 43a, its vertical axis indicates an accuracy index, and its horizontal axis indicates dataset names. As seen in a legend box 51, the graph 50 represents the information 22 on the accuracies of results of analysis of the different versions of learned models 30 whose analysis purposes are common to each other. Specifically, as seen from a first legend 51a to a third legend 51c, the graph 50 represents the information 22 on the accuracies of results of analysis of the learned models 30 whose version names 25 (see FIG. 2) are "1.0.0", "1.0.1", and "2.0.0" among the learned models 30 whose names are the "learned model A". The first legend 51a represents the learned model 30 whose version name 25 is "1.0.0". The second legend 51b represents the learned model 30 whose version name 25 is "1.0.1". The third legend 51c represents the learned model 30 whose version name 25 is "2.0.0".

A curve 52a shown in the graph 50 represents the information 22 on the accuracy of a result of analysis of the learned model 30 whose version name 25 is "1.0.0". A curve 52b represents the information 22 on the accuracy of a result of analysis of the learned model 30 whose version name 25 is "1.0.1". A curve 52c represents the information 22 on the accuracy of a result of analysis of the learned model 30 whose version name 25 is "2.0.0".

The graph 50 represents the information on the accuracies of results of analysis of the different versions of the learned models 30 using datasets A to D. In other words, it can be said that the graph 50 represents first analysis accuracy information 22a, which is the information on the accuracies of results of analysis of the different versions of learned models 30 whose analysis purposes are common to each other as the information 22 when focusing attention on one dataset. Also, it can be said that the graph 50 represents second analysis accuracy information 22b, which is the information on the accuracies of results of analysis of the to-be-analyzed data items 20 different from each other as the information 22 when focusing attention on one version. That is, the controller 12 is configured to control the display 2a to display the information 22 on the accuracy of the result of analysis by the selected learned model 30, the first analysis accuracy information 22a and the second analysis accuracy information 22b for comparative display of the information.

A matrix 53 displayed in the matrix indication area 47b includes of a version name indication field 53a, a dataset name indication field 53b, a parameter indication field 53c, an accuracy indication field 53d, and an IoU indication field 53e. Although the information corresponding to the graph 50 will be displayed in the matrix 53, only a part of this information is displayed in the matrix 53 in the exemplary screen shown in FIG. 6 for ease of illustration.

The version name indication field 53a is an indication field that indicates the version name 25 of the learned model 30. The dataset name indication field 53b is an indication field that indicates names of the to-be-analyzed data items 20 using the learned models 30. The parameter indication field 53c is an indication field that indicates the inference parameters set in analysis of the to-be-analyzed data 20. The accuracy indication field 53d is an indication field that indicates values of Accuracy when the learned models 30 analyze the to-be-analyzed data 20. The IoU indication field 53e is an indication field that indicates IoUs when the learned models 30 analyze the to-be-analyzed data 20. In other words, the accuracy indication field 53d and the IoU indication field 53e are indication fields that indicate the information 22 on the accuracies of results of analysis. In the exemplary screen shown in FIG. 6, the IoU indication field 53e includes four indication areas indicating four IoUs, which are IoU_1, IoU_2, IoU_3 and IoU_4. The Accuracy is a value that indicates a rate that analysis of the to-be-analyzed data 20 by the learned model 30 is correct. The IoU is a value that indicates a matching degree between an inference result and a true result in the analysis of the to-be-analyzed data 20 by the learned model 30.

In this embodiment, the controller 12 is configured to be able to display the version history screen 42 and the accuracy evaluation screen 43 of the learned models 30 whose name is selected by the operator corresponding to versions that are selected by the operator from selected learned models. In other words, the controller 12 is configured to acquire, based on the learned models 30 that are selected by the operator and whose versions are selected by the operator, various types of data that are associated with the versions of learned models from the storage 11 (see FIG. 1), and to direct the display 2a to display the version history screen 42 and the accuracy evaluation screen 43.

### (Settings of Analysis Recipe)

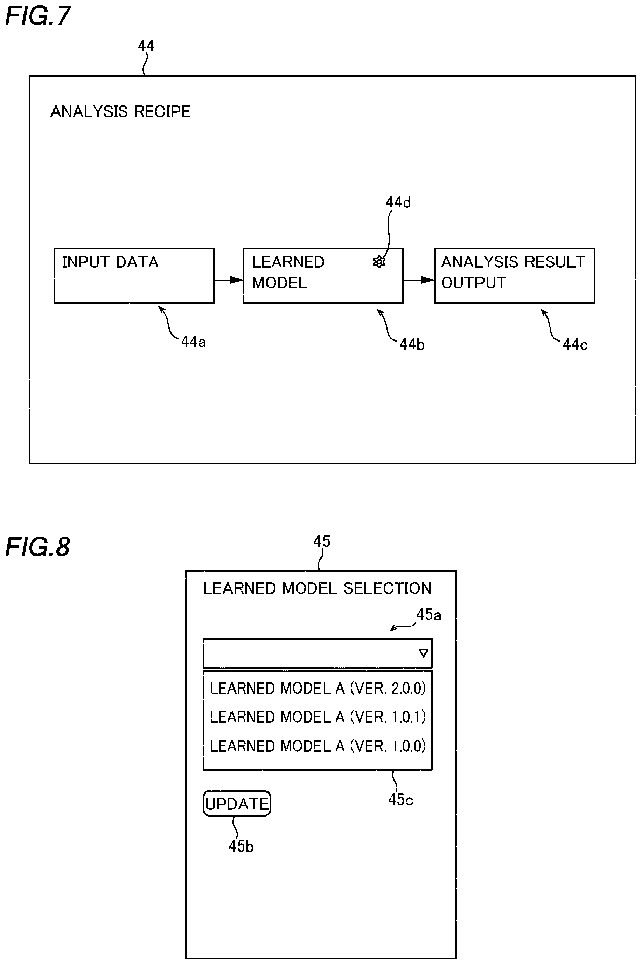

A configuration for analyzing to-be-analyzed data 20 (see FIG. 1) using the learned model 30 produced (see FIG. 1) is now described with reference to FIGS. 7 and 8.

An analysis recipe setting screen 44 shown in FIG. 7 includes an input data setting field 44a, a learned-model setting field 44b, and an analysis-result output destination setting field 44c.

The Input data setting field 44a is a setting field for setting the to-be-analyzed data 20 to be analyzed by the learned model 30. The learned-model setting field 44b is a setting field for setting the learned model 30 to analyze the to-be-analyzed data 20 that is set in the input data setting field 44a. The analysis-result output destination setting field 44c is a setting field for setting an output destination of a result of analysis to which the result is sent when the learned model 30 analyzes the to-be-analyzed data 20.

An operator can set the to-be-analyzed data 20, the learned model 30, and the output destination of a result of analysis so as to create an analysis recipe including instructions including which to-be-analyzed data 20 is analyzed, which includes learned model 30 is used for the analysis, and where the result of the analysis is sent. The operator can analyze the to-be-analyzed data 20 based on the analysis recipe created.

In addition, a tool button 44d is indicated in the learned-model setting field 44b. The tool button 44d is a GUI press button. When the tool button 44d is pressed, the controller 12 displays the learned model selection screen 45 shown in FIG. 8.

The learned model selection screen 45 shown in FIG. 8 includes a learned-model selection field 45a and an update button 45b. The learned model selection field 45a is a selection field for indicating options 45c of learned models 30. The learned model selection field 45a is, for example, a combo box. The update button 45b is a GUI press button displayed on the learned model selection screen 45.

The controller 12 (see FIG. 1) displays the learned model 30 (see FIG. 1) that is selected by the operator, and different versions of learned models 30 whose analysis purposes are common to the selected learned model 30 selected by the operator as the options 45c.

When the update button 45b is pressed while any of options 45c is selected, the controller 12 sets the selected version of learned model 30 into the learned-model setting field 44b (see FIG. 7) on the analysis recipe setting screen 44 (see FIG. 7), and closes the learned model selection screen 45.

### (Display Process of Learned Models)

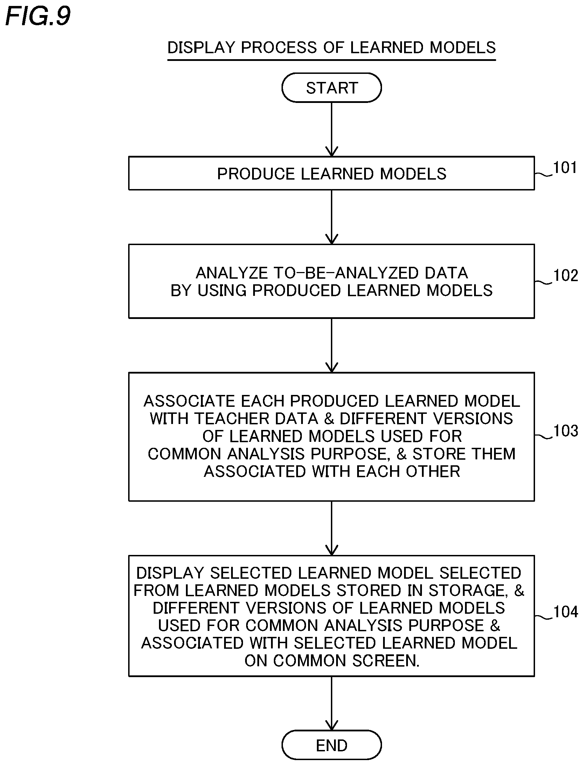

A process of the data analysis system 100 (see FIG. 1) according to this embodiment that displays a plurality of learned models 30 (see FIG. 1) on the display 2a (see FIG. 1) is now described with reference to FIG. 9.

In step 101, the learned model producer 12b (see FIG. 1) produces the learned models 30 by using at least the teacher data 21 (see FIG. 1). In this embodiment, the learned model producer 12b uses the teacher data 21, the training parameters 23, and the learned model 30 or the training model algorithm 24 to produce the learned models 30.

In step 102, the analyzer 12a (see FIG. 1) analyzes the to-be-analyzed data 20 (see FIG. 1) by using the learned models 30 produced, and acquires information 22 on accuracies of results of the analysis (see FIG. 1).

In step 103, the controller 12 (see FIG. 1) associates each of the plurality of learned models 30 with the teacher data 21 that is used to produce each of the plurality of learned models 30 by the learned model producer 12b and with different versions of learned models 30 that are other learned models and are used for a common analysis purpose to each of the plurality of learned models, and to store the learned models associated with each other. In this embodiment, the controller 12 stores each of the plurality of learned models 30 associated with information 22 on accuracy of a result of analysis (see FIG. 1) of the to-be-analyzed data 20 together with the teacher data 21, and with the different versions of learned models 30 whose analysis purpose is common to each of the plurality of learned models in step 103.

In step 104, the controller 12 displays the selected learned model 30 that is selected from the plurality of learned models 30 stored, and the different versions of learned models 30 that are associated with the selected learned model 30 on a common screen. In this embodiment, the controller 12 displays the selected learned model 30, and the different versions of learned models 30 whose analysis purposes are common to the selected learned model 30 and that are associated with the selected learned model 30 on the common screen. After that, the procedure ends.

In step 103, if the controller 12 does not store information 22 on accuracies of results of analysis associated with the learned models 30 together with the teacher data 21 in the storage 11, the process of step 102 can be skipped.

### (Determination Process of Version Name of Learned Model)

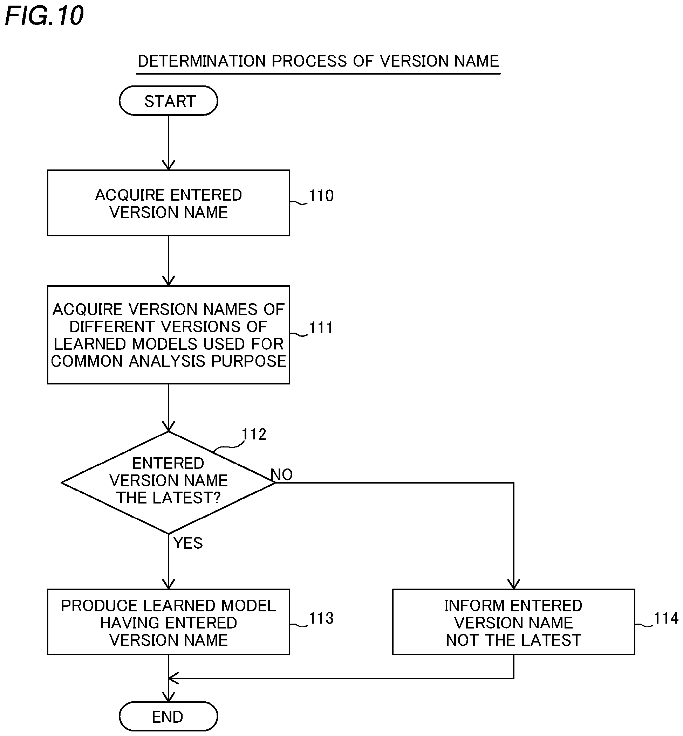

A process of the controller 12 (see FIG. 1) for determining the version name 25 (see FIG. 2) in production of the learned model 30 (see FIG. 1) is now described with reference to FIG. 10.

In step 110, the controller 12 acquires the version name 25 that is entered in the version name input field 40f (see FIG. 3) of the learned model production screen 40 (see FIG. 3).

In step 111, the controller 12 acquires the version name 25 of the learned model 30 that is selected in the learned model display screen 41 (see FIG. 4), and the version names 25 of different versions of learned models 30 whose analysis purposes are common to the selected learned model 30.

In step 112, the controller 12 determines whether the version name 25 that is entered in the version name input field 40f is the latest version. Specifically, the controller 12 compares MAJOR, MINOR and PATCH versions of the version name 25 that is entered in the version name input field 40f with MAJOR, MINOR and PATCH versions of each of the version names 25 of the plurality of learned model 30 that are acquired in step 111. If the version name 25 that is entered in the version name input field 40f is the latest version, the controller 12 moves the procedure to step 113. If the version name 25 that is entered in the version name input field 40f is not the latest version, the controller 12 moves the procedure to step 114.

In step 113, the learned model producer 12b (see FIG. 1) produces the learned model 30 by using the version name 25 that is entered in the version name input field 40f. After that, the procedure ends.

If the procedure goes from step 112 to step 114, the controller 12 indicates that the version name 25 that is entered in the version name input field 40f is not the latest version in step 114, For example, the controller 12 indicates on the learned model production screen 40 in a pop-up indication indicating that the version name 25 that is entered in the version name input field 40f is not the latest version. In addition, the controller 12 controls the learned model producer 12b not to produce the learned model 30. For example, the controller 12 disables the produce button 40i (see FIG. 3), which is displayed on the learned model production screen 40, so that the produce button 40i cannot be pressed. After that, the procedure ends.

### (Advantages of the Embodiment)

In this embodiment, the following advantages are obtained.

As discussed above, the data analysis system 100 according to this embodiment is a data analysis system 100 for analyzing to-be-analyzed data 20, which is data to be analyzed, by using a learned model 30, the data analysis system including a data acquirer 10 configured to acquire the to-be-analyzed data 20; an analyzer 12a configured to analyze the to-be-analyzed data 20 by using the learned model 30; a learned model producer 12b configured to produce the learned model 30 by using at least teacher data 21; a storage 11 configured to store each of a plurality of learned models 30 as the learned model associated with the teacher data 21 that is used to produce each of the plurality of learned models 30 by the learned model producer 12b, and with different versions of learned models 30 that are other learned models and are used for a common analysis purpose to each of the plurality of learned models; a display 2a configured to display the plurality of learned models 30 stored in the storage 11; and a controller 12 configured to control the display 2a to display a selected learned model 30 that is selected from the plurality of learned models 30 displayed on the display 2a, and the different versions of learned models 30 that are associated with the selected learned model 30 on a common screen.

Accordingly, because the common screen displays the selected learned model 30, and the different versions of learned models 30 that are associated with the selected learned model 30, operators can easily grasp such a plurality of different versions of learned models 30 at a glance. As a result, it is possible to provide a data analysis system 100 capable of allowing operators to easily grasp the plurality of different versions of learned models 30 at a glance. Consequently, operators can efficiently select a learned model 30 to be used for analysis of to-be-analyzed data 20 from the plurality of different versions of learned models 30 when analyzing the to-be-analyzed data 20.

As discussed above, the data analysis method according to this embodiment is a data analysis method for analyzing to-be-analyzed data 20, which is data to be analyzed, by using a learned model 30, the data analysis method including a step of producing the learned model 30 by using at least teacher data 21; a step of storing each of a plurality of learned models 30 as the learned model associated with the teacher data 21 that is used to produce each of the plurality of learned models 30 by the learned model producer 12b, and with different versions of learned models 30 that are other learned models and are used for a common analysis purpose to each of the plurality of learned models; and a step of displaying a selected learned model 30 that is selected from the plurality of learned models 30 stored, and the different versions of learned models 30 that are associated with the selected learned model 30 on a common screen.

Accordingly, because operators can easily grasp the plurality of different versions of learned models 30 at a glance similar to the aforementioned data analysis system 100, it is possible to provide a data analysis method capable of allowing operators to easily grasp the plurality of different versions of learned models 30 at a glance. Consequently, it is possible to provide a data analysis method capable of allowing operators to efficiently select a learned model 30 to be used for analysis of to-be-analyzed data 20 from the plurality of different versions of learned models 30 when analyzing the to-be-analyzed data 20.

In addition, following additional advantages can be obtained by the aforementioned embodiment added with configurations discussed below.

In this embodiment, as discussed above, the storage 11 is configured to store each of a plurality of learned models 30 associated with information 22 on accuracy of a result of analysis of the to-be-analyzed data 20 together with the teacher data 21, and with the different versions of learned models 30 whose analysis purpose is common to each of the plurality of learned models. Accordingly, it is possible to provide information 22 on accuracies of results of analysis of to-be-analyzed data 20 by a plurality of learned models 30 whose analysis purposes are common to each other for comparative display of the information. Consequently, because information 22 on accuracies of results of analysis by a plurality of learned models 30 can be provided to operators for comparative display of the information, the operators can more effectively select a suitable learned model 30 to be used for analysis of to-be-analyzed data 20 from the plurality of different versions of learned models 30 whose analysis purposes are common to each other.

In this embodiment, as discussed above, the controller 12 is configured to control the display 2a to display the information 22 on the accuracy of the result of analysis by the selected learned model 30 and the information 22 on the accuracies of the results of analysis by the different versions of learned models 30 whose analysis purposes are common to the selected learned model 30 for comparative display of the information. Accordingly, operators can easily find a suitable learned model 30 to be used for analysis of to-be-analyzed data 20 from a plurality of learned models 30 whose analysis purposes are common to each other by comparing information 22 on accuracies of results of analysis. Consequently, operators can easily select a learned model 30 whose accuracy of analysis is high when analyzing to-be-analyzed data 20.

In this embodiment, as described above, the input acceptor 2b configured to accept an instruction input for selection of an operator is provided; and the controller 12 is configured to control the display 2a to display the information 22 on the accuracy of the result of analysis by the selected learned model 30 and the information 22 on the accuracy of the result of analysis based on the learned models 30 whose analysis purposes are common to one of the plurality of learned models 30 and the to-be-analyzed data 20 that are selected in accordance with an instruction input for the selection accepted by the input acceptor 2b for comparative display of the information. Accordingly, the operator can easily find a suitable learned model 30 to be used for analysis of to-be-analyzed data 20 from the plurality of different versions of learned models 30 whose analysis purposes are common to the selected learned model 30. Consequently, operators can easily select the suitable learned model 30 to be used for analysis of to-be-analyzed data 20. As a result, it is possible to improve operation efficiency when selecting the suitable learned model 30 to be used for analysis of to-be-analyzed data 20.

In this embodiment, as discussed above, the storage 11 is configured to store each of the plurality of learned models 30 associated with first analysis accuracy information 22a that is information on accuracy of a result of analysis by the different versions of learned models 30 whose analysis purpose is common to each of the plurality of learned models 30 as the information 22, and second analysis accuracy information 22b that is information on accuracy of a result of analysis obtained by analyzing the to-be-analyzed data 20 that is different from the to-be-analyzed data 20 that is used by a common version of learned models 30 whose version is equal to each of the plurality of learned models 30 as the information 22; and the controller 12 is configured to control the display 2a to display the first analysis accuracy information 22a and the second analysis accuracy information 22b for comparative display of the information. Accordingly, the operator can easily find a suitable learned model 30 to be used for analysis of to-be-analyzed data 20 by comparing the first analysis accuracy information 22a outputted from a plurality of different versions of learned models whose analysis purposes are common to each other with each other. In addition, operators can easily determine whether an accuracy of analysis by the learned model 30 decreases base on comparison of the second analysis accuracy information 22b. Consequently, operators can easily determine whether to necessarily improve the learned model 30 to improve the accuracy of the learned model 30. As a result, because operators can easily determine which learned model 30 is suitable for analysis of to-be-analyzed data 20 and whether to necessarily improve the learned model 30, it is possible to improving operator's convenience (usability).

In this embodiment, as discussed above, the learned model producer 12b is configured to be able to produce, based on the selected learned model 30 that is selected from the plurality of learned models 30 stored in the storage 11, a different version of learned model 30 whose analysis purpose is common to the selected learned model 30. Accordingly, because based on the selected learned model 30 different versions of learned models 30 whose analysis purposes are common to the selected learned model 30 can be produced, it is possible to easily improve the learned model 30 whose analysis purpose is common to the selected learned model 30 and that has been already produced. Consequently, because the learned model 30 that has been already produced can be easily improved, it is possible to easily produce a learned model 30 that have an improved accuracy of analysis of the to-be-analyzed data 20.

In this embodiment, as discussed above, the learned model producer 12b is configured to produce, in a case in which the learned model 30 is produced while the learned model 30 with common analysis purpose is being selected, a different version of learned model 30 whose analysis purpose is common to the selected learned model 30 by changing at least one of the teacher data 21 and training parameters 23 that are specified to produce the selected learned model 30. Accordingly, a different version of learned model 30 whose analysis purpose is common to the selected learned model 30 can be easily produced by changing at least one of teacher data 21 and training parameters 23. Consequently, in a case in which a learned model 30 is selected to be improved for improvement of its accuracy of analysis of to-be-analyzed data 20, it is possible to easily produce a plurality of different versions of learned models 30 whose analysis purposes are common to the selected learned model 30. As a result, it is possible to efficiently improve the learned model 30 to improve the accuracy of analysis of to-be-analyzed data 20 by the learned model 30.

In this embodiment, as discussed above, the controller 12 is configured to control the display 2a, in production of the different version of learned model 30 whose analysis purpose is common to the selected learned model 30, to selectively display a plurality of versions of learned models 30 that are stored in the storage 11. Accordingly, in a case in which an operator will select a learned model 30 whose analysis purpose is common to the selected learned model 30 and that has been already produced to produce a new version of learned model 30 by improving the already produced learned model 30, the operator can easily grasp different versions of learned models whose analysis purposes are common to the selected learned model 30. Consequently, it is possible to improve operator's convenience (usability).

In this embodiment, as discussed above, the controller 12 is configured to, every when a different version of learned model 30 whose analysis purpose common to the selected learned model 30 is produced, add the latest version of learned model 30 as an option. Here, in a case in which a different version of learned model 30 whose analysis purpose common to the selected learned model 30 is produced, an accuracy of analysis of to-be-analyzed data 20 by the different version of learned model 30 produced is not always improved. For this reason, in the case in which a different version of learned model 30 whose analysis purpose common to the selected learned model 30 is produced, for example, a configuration that automatically select the latest version of the learned model 30 to analyze to-be-analyzed data 20 can reduce an accuracy of analysis of the to-be-analyzed data 20 by the latest version of the learned model 30 in some cases. To address this, as stated above, the latest version of the learned model 30 can be prevented from being automatically selected as a learned model 30 that is used to analyze to-be-analyzed data 20 by adding the latest version of learned model 30 as an option. Consequently, it is possible to suppress such reduction of an accuracy of analysis of to-be-analyzed data 20 caused by automatic selection of the latest version of the learned model 30 as a learned model 30 that is used to analyze to-be-analyzed data 20.

In this embodiment, as discussed above, an input acceptor 2b configured to accept an input from an operator is provided; and the controller 12 is configured to determine whether a version name 25 that is accepted by the input acceptor 2b is a latest version name 25 named in accordance with a naming convention, and to prevent the learned model producer 12b from producing the learned model 30 if the version name 25 that is accepted by the input acceptor 2b is not the latest version name 25 named in accordance with the naming convention. Accordingly, it is possible to prevent production of a different series of versions of learned models 30 whose analysis purposes are common to a past version name 25 and whose version names 25 are derived from the past version name 25 of a learned model 30. Consequently, it is possible to prevent complicated management of version names 25 of the learned models 30 whose analysis purposes are common to each other.

In this embodiment, as discussed above, the storage 11 is configured to store learned models 30 whose algorithms 24 of training models are common to each other and that are produced by changing at least one of the teacher data 21 and training parameters 23 that are specified to produce corresponding one of the learned models 30 as different versions of learned models 30 associated with each other. Here, in a case in which a version of an algorithm 24 of training models is updated, analysis operation of the data analysis system 100 cannot be ensured in some cases. If learned models 30 analysis operation of which cannot be ensured are associated with other learned models 30 in storage, maintenance of the data analysis system 100 will be complicated. To address this, the aforementioned configuration is provided to be able to manage versions of learned models 30 whose algorithms 24 of training models are different from each other as different series of versions of learned models. Accordingly, it is possible to prevent that the management of versions includes learned models 30 that have a possibility of unsureness of analysis operation. Accordingly, it is possible to prevent complicated maintenance of the data analysis system 100.

In this embodiment, as discussed above, the step of storing each of the plurality of learned models 30 associated with the different versions of learned models 30 includes a step of storing each of the plurality of learned models 30 associated with information 22 on accuracy of a result of analysis of the to-be-analyzed data 20 together with the teacher data 21, and with the different versions of learned models 30 whose analysis purpose is common to each of the plurality of learned models. Accordingly, it is possible to provide information 22 on accuracies of results of analysis of to-be-analyzed data 20 by a plurality of learned models 30 whose analysis purposes are common to each other for comparative display of the information. Consequently, because information 22 on accuracies of results of analysis by a plurality of learned models 30 can be provided to operators for comparative display of the information, it is possible to provide a data analysis method capable of allowing the operators to easily select a suitable learned model 30 to be used for analysis of to-be-analyzed data 20 from the plurality of different versions of learned models 30 whose analysis purposes are common to each other.

### [Modified Embodiments]

Note that the embodiment disclosed this time must be considered as illustrative in all points and not restrictive. The scope of the present invention is not shown by the above description of the embodiments but by the scope of claims for patent, and all modifications (modified embodiments) within the meaning and scope equivalent to the scope of claims for patent are further included.

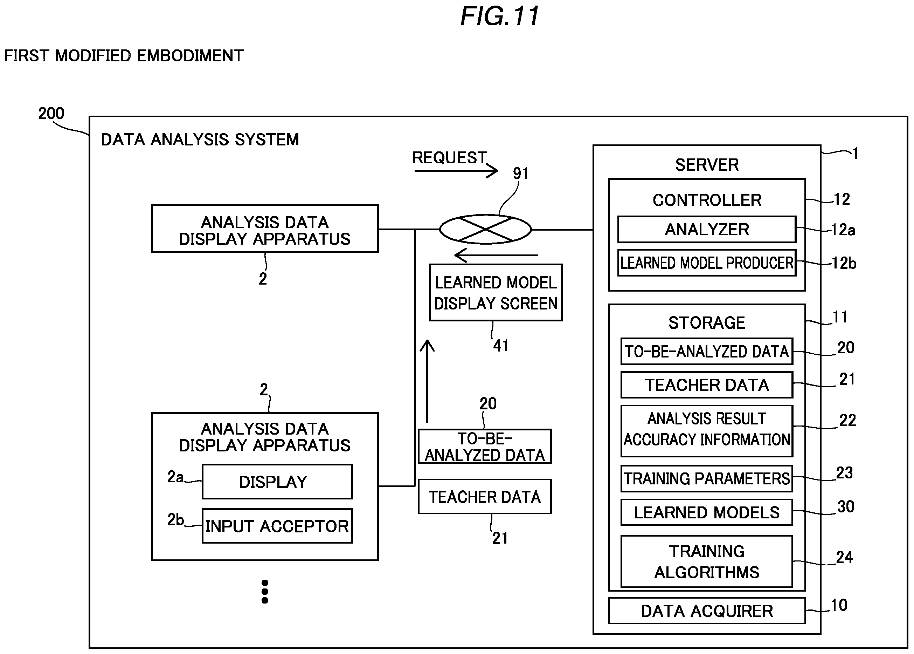

While the example in which the data analysis system 100 is constructed of a so-called on-premises system has been shown in the aforementioned embodiment, the present invention is not limited to this. For example, as shown in a first modified embodiment of FIG. 11, the data analysis system 200 can be constructed of as a so-called cloud service system.

In the first modified embodiment shown in FIG. 11, a server 1 and analysis data display apparatuses 2 are connected to each other through a network 91. The network 91 can be, for example, the Internet. In the first modified embodiment, the network 91 is the Internet, and the data analysis system 200 is a system constructed in a so-called cloud computing form. Also in this configuration, similar to the data analysis system 100 according to the aforementioned embodiment, it is possible to provide a data analysis system 200 capable of allowing operators to easily grasp the plurality of different versions of learned models 30 at a glance.

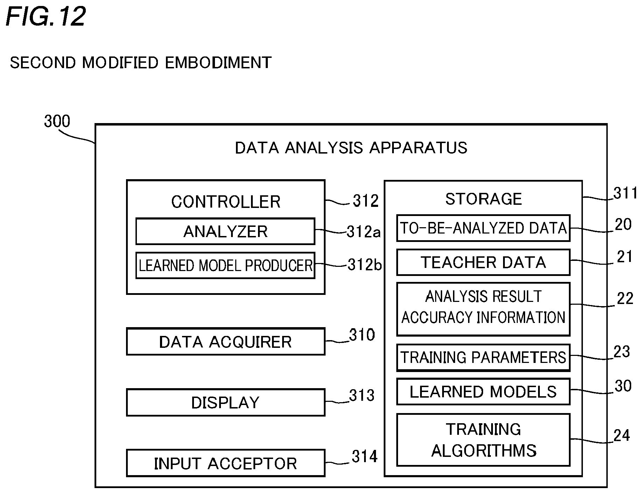

While the example in which the data analysis system 100 includes the server 1 and the analysis data display apparatuses 2 separately provided from each other has been shown in the aforementioned embodiment, the present invention is not limited to this. For example, the data analysis system can be constructed of a single information processing apparatus as shown in a data analysis apparatus 300 of FIG. 12.

As shown in FIG. 12, the data analysis apparatus 300 includes a data acquirer 310, a storage 311, a controller 312, a display 313 and an input acceptor 314.

The data acquirer 310, the storage 311, and the controller 312 included in the data analysis apparatus 300 have similar configurations to the data acquirer 10, the storage 11 and the controller 12 included in the data analysis system 100 according to the aforementioned embodiment, and their description is omitted.

The controller 312 includes an analyzer 312a, and a learned model producer 312b. The analyzer 312a, and the learned model producer 312b have similar configurations to the analyzer 12a, and the learned model producer 12b in the aforementioned embodiment, and their description is omitted.

The display 313, and the input acceptor 314 included in the data analysis apparatus 300 according to a second modified embodiment have similar configurations to the display 2a, and the input acceptor 2b included in the data analysis system 100 according to the aforementioned embodiment, and their description is omitted.

As discussed above, the data analysis apparatus 300 according to the second modified embodiment is a data analysis apparatus for analyzing to-be-analyzed data 20, which is data to be analyzed, by using a learned model 30, the data analysis apparatus including the data acquirer 310 configured to acquire the to-be-analyzed data 20; the analyzer 312a configured to analyze the to-be-analyzed data 20 by using the learned model 30; the learned model producer 312b configured to produce the learned model 30 by using at least teacher data 21; the storage 311 configured to store each of a plurality of learned models 30 as the learned model associated with the teacher data 21 that is used to produce each of the plurality of learned models 30 by the learned model producer 312b, and with different versions of learned models 30 that are other learned models and are used for a common analysis purpose to each of the plurality of learned models; the display 313 configured to display the plurality of learned models 30 stored in the storage 311; and the controller 312 configured to control the display 313 to display a selected learned model 30 that is selected from the plurality of learned models 30 displayed on the display 2a, and the different versions of learned models 30 that are associated with the selected learned model 30 on a common screen.

Accordingly, because operators can easily grasp the plurality of different versions of learned models 30 at a glance similar to the aforementioned data analysis system 100, it is possible to provide a data analysis apparatus 300 capable of allowing operators to easily grasp the plurality of different versions of learned models 30 at a glance. Consequently, it is possible to provide a data analysis apparatus 300 capable of allowing operators to efficiently select a learned model 30 to be used for analysis of to-be-analyzed data 20 from the plurality of different versions of learned models 30 when analyzing the to-be-analyzed data 20.

While the example in which the controller 12 displays a selected learned model 30, and a plurality of different versions of learned models 30 whose analysis purposes are common to the selected learned model 30 and that are associated with the selected learned model 30 on the common screen has been shown in the aforementioned embodiment, the present disclosure is not limited to this. For example, the controller can be configured to display a plurality of learned models 30 whose analysis purposes are common to the selected learned model 30 if the plurality of learned models 30 are different versions of the selected learned model 30.

While the example in which the storage 11 is configured to store each of a plurality of learned models 30 associated with information 22 on accuracy of a result of analysis of the to-be-analyzed data 20 together with the teacher data 21 has been shown in the aforementioned embodiment, the present invention is not limited to this. For example, the storage 11 is not necessarily configured to store each of a plurality of learned models 30 associated with information 22 on accuracy of a result of analysis of the to-be-analyzed data 20 as long as the storage 11 stores a plurality of different versions of learned models 30 whose analysis purposes are common to the selected learned model 30. However, if the storage 11 does not store each of a plurality of learned models 30 associated with information 22 on accuracy of a result of analysis of the to-be-analyzed data 20, it will be difficult to provide operators with comparative display of information 22 on accuracies of results of analysis of the to-be-analyzed data 20. For this reason, the storage 11 is preferably configured to store each of a plurality of learned models 30 associated with information 22 on accuracy of a result of analysis of the to-be-analyzed data 20 together with the teacher data 21.

While the example in which the controller 12 is configured to direct the display 2a to display the information 22 on the accuracy of the result of analysis by the selected learned model 30 and the information 22 on the accuracies of the results of analysis by the different versions of learned models 30 whose analysis purpose is common to the selected learned model 30 for comparative display of the information has been shown in the aforementioned embodiment, the present invention is not limited to this. The controller 12 is not necessarily configured to direct the display 2a to display the information 22 on the accuracy of the result of analysis by the selected learned model 30 and the information 22 on the accuracies of the results of analysis by the different versions of learned models 30 whose analysis purpose is common to the selected learned model 30 for comparative display of the information as long as the controller 12 displays the selected learned model 30, and a different versions of learned models 30 whose analysis purposes are common to the selected learned model 30 and that are associated with the selected learned model 30 on the common screen. However, if the controller 12 does not direct the display 2a to display the information 22 on the accuracy of the result of analysis by the selected learned model 30 and the information 22 on the accuracies of the results of analysis by the different versions of learned models 30 whose analysis purpose is common to the selected learned model 30 for comparative display of the information, it will be difficult to provide operators with comparative display of information 22 on accuracies of results of analysis of the to-be-analyzed data 20. For this reason, the controller 12 is preferably configured to direct the display 2a to display the information 22 on the accuracy of the result of analysis by the selected learned model 30 and the information 22 on the accuracies of the results of analysis by the different versions of learned models 30 whose analysis purpose is common to the selected learned model 30 for comparative display of the information.

While the example in which the storage 11 stores the first analysis accuracy information 22a and the second analysis accuracy information 22b, which are the information 22 on the accuracies of the results of analysis by the different versions of learned models 30 whose analysis purpose is common to the selected learned model 30, associated with the learned model 30 has been shown in the aforementioned embodiment, the present invention is not limited to this. For example, the storage 11 can be configured to store at least one of the first analysis accuracy information 22a and the second analysis accuracy information 22b associated with the learned model 30.

While the example in which the controller 12 is configured to control the display 2a to display the first analysis accuracy information 22a and the second analysis accuracy information 22b for comparative display of the information has been shown in the aforementioned embodiment, the present invention is not limited to this. For example, the controller 12 can be configured to control the display 2a to display one of the first analysis accuracy information 22a and the second analysis accuracy information 22b for comparative display of the information.

While the example in which the learned model producer 12b is configured to be able to produce, based on the selected learned model 30 that is selected from the plurality of learned models 30 stored in the storage 11, a different version of learned model 30 whose analysis purpose is common to the selected learned model 30 has been shown in the aforementioned embodiment, the present invention is not limited to this. For example, the learned model producer 12b can be configured to produce a learned model 30 based not on the selected learned model 30 but on the algorithm 24 of the training model whose analysis purpose is common to the selected learned model 30 and that uses at least one of different teacher data 21 and different training parameters 23 from the selected learned model 30.

While the example in which the controller 12 is configured to control the display 2a, in production of the different version of learned model 30 whose analysis purpose is common to the selected learned model 30, to selectively display a plurality of versions of learned models 30 that are stored in the storage 11 has been shown in the aforementioned embodiment, the present invention is not limited to this. For example, alternatively, the controller 12 does not direct the display 2a, in production of the different version of learned model 30 whose analysis purpose is common to the selected learned model 30, to selectively display a plurality of versions of learned models 30 that are stored in the storage 11. However, if the controller 12 does not direct the display 2a, in production of the different version of learned model 30 whose analysis purpose is common to the selected learned model 30, to selectively display a plurality of versions of learned models 30 that are stored in the storage 11, operators cannot easily grasp different versions of learned models 30 whose analysis purposes are common to the selected learned model 30. For this reason, the controller 12 is preferably configured to control the display 2a in production of the different version of learned model 30 whose analysis purpose is common to the selected learned model 30, to selectively display a plurality of versions of learned model 30 that are stored in the storage 11.

While the example in which the controller 12 is configured to, every when a different version of learned model 30 whose analysis purpose common to the selected learned model 30 is produced, add the latest version of learned model 30 as an option has been shown in the aforementioned embodiment, the present invention is not limited to this. For example, alternatively, the controller 12 does not add the latest version of learned model 30 as an option.

While the example in which the controller 12 is configured to determine whether a version name 25 that is accepted by the input acceptor 2b is a latest version name 25 named in accordance with a naming convention, and to prevent the learned model producer 12b from producing the learned model 30 if the version name 25 that is accepted by the input acceptor 2b is not the latest version name 25 named in accordance with the naming convention has been shown in the aforementioned embodiment, the present invention is not limited to this. For example, the controller 12 can be configured to produce the learned model 30 by using the learned model producer 12b even if the version name 25 that is accepted by the input acceptor 2b is not the latest version name 25 named in accordance with the naming convention. However, if the controller 12 is configured to control the learned model producer 12b to produce the learned model 30 even if the version name 25 that is accepted by the input acceptor 2b is not the latest version name 25 named in accordance with the naming convention, management of version names 25 of the learned model 30 becomes complicated. For this reason, the controller 12 is preferably configured to prevent the learned model producer 12b from producing the learned model 30 if the version name 25 that is accepted by the input acceptor 2b is not the latest version name 25 named in accordance with the naming convention.

While the example in which the controller 12 is configured to store learned models 30 whose algorithms 24 of training models are common to each other and that are produced by changing at least one of the teacher data 21 and training parameters 23 that are specified to produce corresponding one of the learned models 30 as different versions of learned models 30 associated with each other has been shown in the aforementioned embodiment, the present invention is not limited to this. For example, the controller 12 can be configured to store learned models 30 that are produced by using the same teacher data 21 and training parameters 23 that are specified to produce corresponding one of the learned models 30 but by changing a version of algorithm 24 of a training model to another as different versions of learned models 30 associated with each other. However, in a case in which the version of the algorithm 24 of the training model is updated, the learned model 30 produced does not properly work in some cases. For this reason, the controller 12 is preferably configured to store learned models 30 whose algorithms 24 of training models are common to each other and that are produced by changing at least one of the teacher data 21 and training parameters 23 that are specified to produce corresponding one of the learned models 30 as different versions of learned models 30 associated with each other.

### [Modes]

It is understood by those skilled in the art that the exemplary embodiments described above are concrete examples of the following aspects:

### (Mode Item 1)

A data analysis system according to mode item 1 is a data analysis system for analyzing to-be-analyzed data, which is data to be analyzed, by using a learned model, the data analysis system including a data acquirer configured to acquire the to-be-analyzed data items; an analyzer configured to analyze the to-be-analyzed data by using the learned model; a learned model producer configured to produce the learned model by using at least teacher data; a storage configured to store each of a plurality of learned models as the learned model associated with the teacher data that is used to produce each of the plurality of learned models by the learned model producer, and with a different version(s) of learned model(s) that is/are other learned model(s) of the plurality of learned models and whose analysis purpose is common to each of the plurality of learned models; a display configured to display the plurality of learned models stored in the storage; and a controller configured to control the display to display a selected learned model that is selected from the plurality of learned models displayed on the display, and the different version(s) of learned model(s) that is/are associated with the selected learned model on a common screen.

### (Mode Item 2)

In the data analysis system according to mode item 1, the storage is configured to store each of the plurality of learned models associated with information on accuracy of a result of analysis of the to-be-analyzed data together with the teacher data, and with the different version(s) of learned model(s) whose analysis purpose is common to each of the plurality of learned models.

### (Mode Item 3)

In the data analysis system according to mode item 2, the controller is configured to control the display to display the information on the accuracy of the result of analysis by the selected learned model and the information on the accuracy of the result of analysis by the different version(s) of learned model(s) whose analysis purposes is/are common to the selected learned model for comparative display of the information.

### (Mode Item 4)

In the data analysis system according to mode item 2 or 3, an input acceptor configured to accept an instruction input for selection of an operator is further provided; and the controller is configured to control the display to display the selected learned model that is selected in accordance with the instruction input for the selection accepted by the input acceptor and the information on accuracy of a result of analysis analyzed based on the to-be-analyzed data by the selected learned model, and the learned model(s) whose analysis purpose is common to the selected learned model and the information on accuracy of a result(s) of analysis analyzed based on the to-be-analyzed data by the learned model(s) whose analysis purpose is common to the selected learned model as the information for comparative display of the information.

### (Mode Item 5)

In the data analysis system according to mode item 3 or 4, the storage is configured to store each of the plurality of learned models associated with first analysis accuracy information that is information on accuracy of a result of analysis by the different version(s) of learned model(s) whose analysis purposes is/are common to each of the plurality of learned models as the information, and second analysis accuracy information that is information on accuracy of a result of analysis obtained by analyzing the to-be-analyzed data that is different from the to-be-analyzed data that is used by a common version of learned model(s) whose version is equal to each of the plurality of learned models as the information; and the controller is configured to control the display to display the first analysis accuracy information and the second analysis accuracy information for comparative display of the information.

### (Mode Item 6)

In the data analysis system according to any of mode items 2 to 4, the learned model producer is configured to be able to produce, based on the selected learned model that is selected from the plurality of learned models stored in the storage, a different version of learned model whose analysis purpose is common to the selected learned model.

### (Mode Item 7)

In the data analysis system according to mode item 6, the learned model producer is configured to produce, in a case in which the learned model is produced while the learned model with common analysis purpose is being selected, a different version of learned model whose analysis purpose is common to the selected learned model by changing at least one of the teacher data and training parameters that are specified to produce the selected learned model.

### (Mode Item 8)

In the data analysis system according to mode item 7, the controller is configured to control the display, in production of the different version of learned model whose analysis purpose is common to the selected learned model, to selectively display a plurality of versions of learned model that are stored in the storage.

### (Mode Item 9)

In the data analysis system according to any of mode items 1 to 8, the controller is configured to, every when a different version of learned model whose analysis purpose is common to the selected learned model is produced, add the latest version of learned model as an option.

### (Mode Item 10)

In the data analysis system according to any of mode items 1 to 3, an input acceptor configured to accept an input from an operator is further provided; and the controller is configured to determine whether a version name that is accepted by the input acceptor is a latest version name named in accordance with a naming convention, and to prevent the learned model producer from producing the learned model if the version name that is accepted by the input acceptor is not the latest version name named in accordance with the naming convention.

### (Mode Item 11)

In the data analysis system according to any of mode items 1 to 10, the storage is configured to store learned models whose algorithms of training models are common to each other and that are produced by changing at least one of the teacher data and training parameters that are specified to produce corresponding one of the learned models as different versions of learned models associated with each other.

### (Mode Item 12)

A data analysis apparatus according to mode item 12 is a data analysis apparatus for analyzing to-be-analyzed data, which is data to be analyzed, by using a learned model, the data analysis apparatus including a data acquirer configured to acquire the to-be-analyzed data items; an analyzer configured to analyze the to-be-analyzed data by using the learned model; a learned model producer configured to produce the learned model by using at least teacher data; a storage configured to store each of a plurality of learned models as the learned model associated with the teacher data that is used to produce each of the plurality of learned models by the learned model producer, and with a different version(s) of learned model(s) that is/are other learned model(s) of the plurality of learned models and whose analysis purpose is common to each of the plurality of learned models; a display configured to display the plurality of learned models stored in the storage; and a controller configured to control the display to display a selected learned model that is selected from the plurality of learned models displayed on the display, and the different version(s) of learned model(s) that is/are associated with the selected learned model on a common screen.

### (Mode Item 13)

A data analysis method according to mode item 13 is a data analysis method for analyzing to-be-analyzed data, which is data to be analyzed, by using a learned model, the data analysis method includes a step of producing the learned model by using at least teacher data; a step of storing each of a plurality of learned models as the learned model associated with the teacher data that is used to produce each of the plurality of learned models by the learned model producer, and with a different version(s) of learned model(s) that is/are other learned model(s) of the plurality of learned models and whose analysis purpose is common to each of the plurality of learned models; and a step of displaying a selected learned model that is selected from the plurality of learned models stored, and the different version(s) of learned model(s) that is/are associated with the selected learned model on a common screen.

### (Mode Item 14)

In the data analysis apparatus according to mode item 13, the step of storing each of the plurality of learned models associated with the different version(s) of learned model(s) includes a step of storing each of the plurality of learned models associated with information on accuracy of a result of analysis of the to-be-analyzed data together with the teacher data, and with the different version(s) of learned model(s) whose analysis purpose is common to each of the plurality of learned models.

## Claims

1. A data analysis system (100) for analyzing to-be-analyzed data (20), which is data to be analyzed, by using a learned model (30),
the data analysis system comprising:
a data acquirer (10) configured to acquire the to-be-analyzed data (20);
an analyzer (12a) configured to analyze the to-be-analyzed data (20) by using the learned model (30);
a learned model producer (12b) configured to produce the learned model (30) by using at least teacher data (21) ;
a storage (11) configured to store each of a plurality of learned models (30) as the learned model associated with the teacher data (21) that is used to produce each of the plurality of learned models (30) by the learned model producer (12b), and with a different version(s) of learned model(s) (30) that is/are other learned model(s) of the plurality of learned models and whose analysis purpose is common to each of the plurality of learned models;
a display (2a) configured to display the plurality of learned models (30) stored in the storage (11); and
a controller (12) configured to control the display (2a) to display a selected learned model (30) that is selected from the plurality of learned models (30) displayed on the display (2a), and the different version(s) of learned model(s) (30) that is/are associated with the selected learned model (30) on a common screen.

2. The data analysis system according to claim 1, wherein the storage (11) is configured to store each of the plurality of learned models (30) associated with information (22) on accuracy of a result of analysis of the to-be-analyzed data (20) together with the teacher data (21), and with the different version(s) of learned model(s) (30) whose analysis purpose is common to each of the plurality of learned models.

3. The data analysis system according to claim 2, wherein the controller (12) is configured to control the display (2a) to display the information (22) on the accuracy of the result of analysis by the selected learned model (30) and the information (22) on the accuracy of the result of analysis by the different version(s) of learned model(s) (30) whose analysis purposes is/are common to the selected learned model (30) for comparative display of the information.

4. The data analysis system according to claim 3 further comprising an input acceptor (2b) configured to accept an instruction input for selection of an operator, wherein
the controller (12) is configured to control the display (2a) to display the selected learned model (30) that is selected in accordance with the instruction input for the selection accepted by the input acceptor (2b) and the information on accuracy of a result of analysis analyzed based on the to-be-analyzed data (20) by the selected learned model (30), and the learned model(s) (30) whose analysis purpose is common to the selected learned model (30) and the information on accuracy of a result(s) of analysis analyzed based on the to-be-analyzed data (20) by the learned model(s) (30) whose analysis purpose is common to the selected learned model (30) as the information (22) for comparative display of the information.

5. The data analysis system according to claim 3, wherein
the storage (11) is configured to store each of the plurality of learned models (30) associated with first analysis accuracy information (22a) that is information on accuracy of a result of analysis by the different version(s) of learned model(s) (30) whose analysis purposes is/are common to each of the plurality of learned models (30) as the information (22), and second analysis accuracy information (22b) that is information on accuracy of a result of analysis obtained by analyzing the to-be-analyzed data (20) that is different from the to-be-analyzed data (20) that is used by a common version of learned model(s) (30) whose version is equal to each of the plurality of learned models (30) as the information (22); and
the controller (12) is configured to control the display (2a) to display the first analysis accuracy information (22a) and the second analysis accuracy information (22b) for comparative display of the information.

6. The data analysis system according to claim 2, wherein the learned model producer (12b) is configured to be able to produce, based on the selected learned model (30) that is selected from the plurality of learned models (30) stored in the storage (11), a different version of learned model (30) whose analysis purpose is common to the selected learned model (30).

7. The data analysis system according to claim 6, wherein the learned model producer (12b) is configured to produce, in a case in which the learned model (30) is produced while the learned model (30) with common analysis purpose is being selected, a different version of learned model (30) whose analysis purpose is common to the selected learned model (30) by changing at least one of the teacher data (21) and training parameters (23) that are specified to produce the selected learned model (30).

8. The data analysis system according to claim 7, wherein the controller (12) is configured to control the display (2a), in production of the different version of learned model (30) whose analysis purpose is common to the selected learned model (30), to selectively display a plurality of versions of learned model (30) that are stored in the storage (11).

9. The data analysis system according to claim 1, wherein the controller (12) is configured to, every when a different version of learned model (30) whose analysis purpose is common to the selected learned model (30) is produced, add the latest version of learned model (30) as an option.

10. The data analysis system according to claim 1 further comprising an input acceptor (2b) configured to accept an input from an operator, wherein
the controller (12) is configured to determine whether a version name (25) that is accepted by the input acceptor (2b) is a latest version name (25) named in accordance with a naming convention, and to prevent the learned model producer (12b) from producing the learned model (30) if the version name (25) that is accepted by the input acceptor (2b) is not the latest version name (25) named in accordance with the naming convention.

11. The data analysis system according to claim 1, wherein the storage (11) is configured to store learned models (30) whose algorithms (24) of training models are common to each other and that are produced by changing at least one of the teacher data (21) and training parameters (23) that are specified to produce corresponding one of the learned models (30) as different versions of learned models (30) associated with each other.

12. A data analysis method for analyzing to-be-analyzed data, which is data to be analyzed, by using a learned model,
the data analysis method comprising:
a step of producing the learned model (30) by using at least teacher data (21);
a step of storing each of a plurality of learned models (30) as the learned model associated with the teacher data (21) that is used to produce each of the plurality of learned models (30) by the learned model producer (12b), and with a different version(s) of learned model(s) (30) that is/are other learned model(s) of the plurality of learned models and whose analysis purpose is common to each of the plurality of learned models; and
a step of displaying a selected learned model (30) that is selected from the plurality of learned models (30) stored, and the different version(s) of learned model(s) (30) that is/are associated with the selected learned model (30) on a common screen.

13. The data analysis method according to claim 12, wherein the step of storing each of the plurality of learned models (30) associated with the different version(s) of learned model(s) (30) includes a step of storing each of the plurality of learned models (30) associated with information (22) on accuracy of a result of analysis of the to-be-analyzed data together with the teacher data (21), and with the different version(s) of learned model(s) (30) whose analysis purpose is common to each of the plurality of learned models.
